# EUROPEAN PATENT SPECIFICATION

(11) **EP 4 556 370 B1**
(45) Date of publication and mention of the grant of the patent: **18.11.2026**
(21) Application number: 24214326.1
(22) Date of filing: 20.11.2024
(51) Int. Cl.: B64D 13/00, B64D 33/08, B64D 41/00

(54) **AIR SYSTEM FOR ELECTRICAL POWER STORAGE ONBOARD AN AIRCRAFT**
LUFTSYSTEM FÜR SPEICHER VON ELEKTRISCHER ENERGIE AN BORD EINES FLUGZEUGS
SYSTÈME D'AIR POUR UNE STOCKAGE D'ÉNERGIE ÉLECTRIQUE À BORD D'UN AÉRONEF

(30) Priority: 20.11.2023 US 202318514524; 21.12.2023 US 202318392946
(43) Date of publication of application: 21.05.2025
(73) Proprietor: PRATT & WHITNEY CANADA CORP., Longueuil, Québec J4G 1A1 (CA)
(72) Inventor: MARK, Michael R., (01BE5) Longueuil, J4G 1A1 (CA); BECKER, Frank, (01BE5) Longueuil, J4G 1A1 (CA); GARIEPY, Raphael, (01BE5) Longueuil, J4G 1A1 (CA); ROBACHE, Remi, (01BE5) Longueuil, J4G 1A1 (CA)
(74) Representative: Dehns

(56) References cited:
- DE-A1- 102019 201 155
- US-A1- 2013 175 001
- US-A1- 2021 031 934
- US-A1- 2022 407 135
- US-B1- 11 728 532
- US-B2- 9 620 827

## Description

### TECHNICAL FIELD

This invention relates generally to an aircraft and, more particularly, to an electrical system for the aircraft.

### BACKGROUND INFORMATION

An aircraft such as an airplane may include a battery or a battery bank located within a storage area. Various types and configurations of batteries, battery banks and storage areas are known in the art. While these known batteries, battery banks and storage areas have various benefits, there is still room in the art for improvement.

US 2022/407135 A1 discloses aircraft battery systems and methods for thermally regulating batteries of aircraft. The aircraft comprises: an air inlet; an air outlet; a battery pack comprising battery cells; and an air channel in fluid communication with the air inlet and the air outlet, a surface of the air channel being in thermal communication with the battery cells whereby air flowing through the air channel exchanges heat with the battery cells through the surface of the air channel. The methods comprise: connecting an external supply of air to the air inlet of the aircraft; and delivering a flow of air through the air channel using the external supply of air.

US 2021/031934 A1 discloses an aircraft having a hybrid-electric propulsion system with an electric storage located in a fuselage.

DE 10 2019 201155 A1 discloses a system and method for cooling a battery and a motor vehicle. The arrangement comprises a battery. A housing surrounds the battery with an air inlet and an air outlet. An air flow channel is designed to generate an air flow. The air flow channel has a cross-sectional constriction and the air outlet opening into the air flow channel in the region of the cross-sectional constriction. The air inlet is connected to multiple air sources and/or the housing has multiple air inlets. Each one air source are connected. A fan is arranged in the air inlet. A control unit which is set up and designed to control signals to the air sources. A wall of the air flow channel is formed by a lower body of the motor vehicle.

US 9,620,827 B2 discloses a thermal management system for a battery system.

US 2013/175001 A1 discloses an air recovery system for a precooler heat-exchanger.

US 11,728,532 B1 discloses an electric aircraft and a method of cooling a battery pack.

### SUMMARY

According to an aspect of the present invention, a system is provided for an aircraft in accordance with claim 1.

The following optional features may be applied to the above aspect in any combination thereof, insofar as they fall within the scope of the appended claims.

The aircraft sub-system may be configured as or otherwise include an environmental control system for a cabin of the aircraft.

The aircraft sub-system may be configured as or otherwise include an anti-icing system or a pneumatic system including a pneumatic actuator.

The electrical power storage may be configured as or otherwise include a battery.

The air system may be configured to direct the pressurized air into the internal compartment to flush off-gassing from the battery out of the internal compartment.

The air sources may include a first air source and a second air source. The flow regulator may be configured to concurrently fluidly couple the first air source and the second air source to the internal compartment.

The air sources may include a first air source and a second air source. The flow regulator may be configured to fluidly couple the first air source to the internal compartment during a first mode. The flow regulator may be configured to fluidly couple the second air source to the internal compartment during a second mode.

The flow regulator may be configured to fluidly decouple the second air source from the internal compartment during the first mode. In addition or alternatively, the flow regulator may be configured to fluidly decouple the first air source from the internal compartment during the second mode.

The aircraft structure may include an outlet to an ambient external environment fluidly coupled to the internal compartment.

The system may also include an internal combustion engine. One of the air sources may be configured as or otherwise include a bleed from the internal combustion engine.

The system may also include an environmental control system for a cabin of the aircraft. One of the air sources may be configured as or otherwise include an outlet from the environmental control system.

The environmental control system may be configured to output pressurized and conditioned air to provide at least some or all of the pressurized air.

The system may also include an aircraft cabin. One of the air sources may be configured as or otherwise include an outlet from the aircraft cabin.

The aircraft cabin may be configured to output pressurized and conditioned air to provide at least some or all of the pressurized air.

The system may also include an anti-icing system. One of the air sources may be configured as or otherwise include an outlet from the anti-icing system.

The anti-icing system may be configured to output pressurized and conditioned air to provide at least some or all of the pressurized air.

The system may also include a pneumatic system, and the pneumatic system may include a pneumatic actuator. One of the air sources may be configured as or otherwise include an outlet from the pneumatic system.

The pneumatic system may be configured to output pressurized and conditioned air to provide at least some or all of the pressurized air.

The system may also include an air port fluidly coupled with an ambient environment external to the aircraft. One of the air sources may be configured as or otherwise include the air port.

The air system may also include an upstream check valve fluidly coupled with and between one of the air sources and the flow regulator. In addition or alternatively, the air system may also include a downstream check valve fluidly coupled with and between the flow regulator and the internal compartment.

The system may also include a propulsor rotor and an electric motor. The electric motor may be configured to drive rotation of the propulsor rotor. The electric motor may be electrically coupled to the electric power storage.

The system may also include an aircraft airframe. The aircraft structure may be configured as part of and/or housed within the aircraft airframe.

The system may also include an aircraft propulsion system. The aircraft structure may be configured as part of and/or housed within the aircraft propulsion system.

The present invention may include any one or more of the individual features disclosed above and/or below (and/or as claimed) alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft system with an air system servicing an electrical power storage.
FIG. 2 is a perspective illustration of an aircraft.
FIG. 2A is a partial perspective illustration of another aircraft.
FIG. 3 is a schematic illustration of a portion of the aircraft system with an aircraft engine, a section of the air system and the electrical power storage.
FIG. 4 is a schematic illustration of a portion of the aircraft system with an environmental control system, a section of the air system and the electrical power storage.
FIG. 5 is a schematic illustration of a portion of the aircraft system with a thermal anti-icing system, a section of the air system and the electrical power storage.
FIG. 6 is a schematic illustration of a portion of the aircraft system with a pneumatic system, a section of the air system and the electrical power storage.
FIG. 7 is a schematic illustration of a portion of the aircraft system with an air port, a section of the air system and the electrical power storage.
FIG. 8 is a schematic illustration of a portion of the aircraft system with an aircraft propulsion system, a section of the air system and the electrical power storage.
FIG. 9 is a partial sectional illustration of a piccolo tube for injecting pressurized air into an internal compartment.

### DETAILED DESCRIPTION

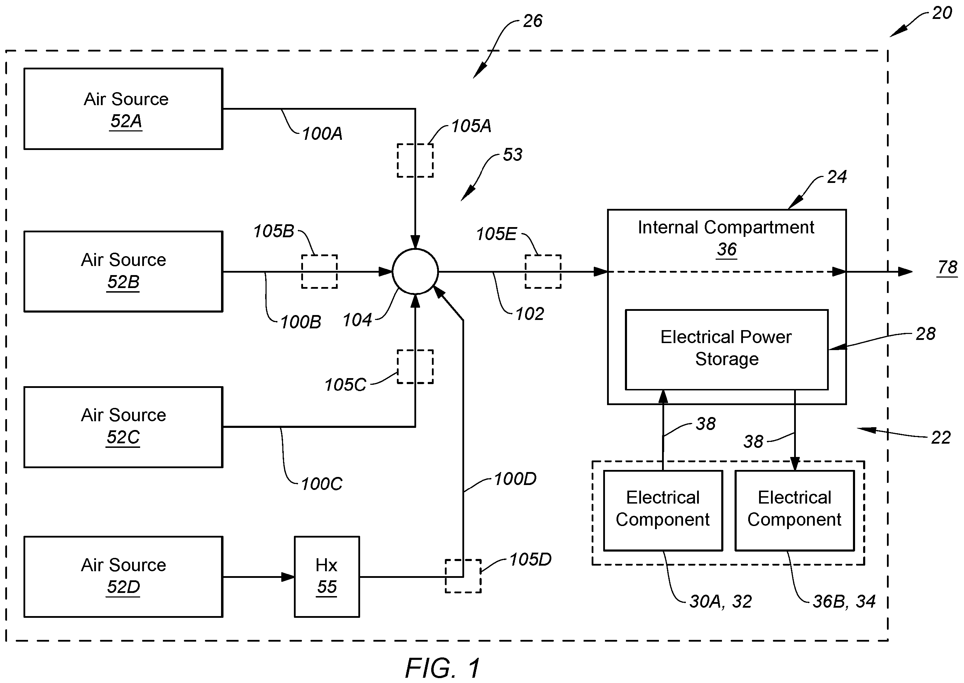

FIG. 1 partially schematically illustrates a system 20 for an aircraft. The aircraft may be an airplane, a rotorcraft (e.g., a helicopter), a drone (e.g., an unmanned aerial vehicle (UAV)), or any other manned or unmanned aerial vehicle or system. However, for ease of description, the aircraft may be described below as an airplane. The aircraft system 20 of FIG. 1 includes an electrical system 22, an aircraft structure 24 and an air system 26.

The electrical system 22 includes an electrical power storage 28 and one or more electrical devices 30A and 30B (generally referred to as "30") electrically coupled to the electrical power storage 28. One or more of the electrical devices 30 may each be configured to generate electricity, and provide the generated electricity to the electrical power storage 28. The first electrical device 30A of FIG. 1, for example, is configured as an electric generator 32. One or more of the electrical devices 30 may each be configured to receive electricity from the electrical power storage 28, and operate using the received electricity. The second electrical device 30B of FIG. 1, for example, is configured as an electric motor 34. This electric motor 34 may be configured as a discrete unit from the electric generator 32. Alternatively, the electric motor 34 and the electric generator 32 may be integrated into a common unit (see dashed box around 32 and 34) such as a motor-generator. The present invention, however, is not limited to such exemplary electrical devices. Examples of one or more other electrical devices which may also or alternatively be electrically coupled to the electrical power storage 28 include, but are not limited to, an electric pump, an electric actuator, aircraft lights, aircraft instruments, and/or the like.

The electrical power storage 28 is configured to store electricity. The electrical power storage 28 of FIG. 1, for example, is configured to store the electricity generated by and received from the first electrical device 30A. The electrical power storage 28 is also configured to output electricity. The electrical power storage 28 of FIG. 1, for example, is configured to output the stored electricity to the second electrical device 30B. Examples of the electrical power storage 28 include, but are not limited to, a battery, a bank of multiple batteries (e.g., a battery bank), and/or the like.

The aircraft structure 24 is configured as or otherwise includes a container for housing the electrical power storage 28. The electrical power storage 28 of FIG. 1, for example, is located and secured within an internal compartment 36 (e.g., an internal cavity) of the aircraft structure 24. This aircraft structure 24 may be a dedicated structure for housing the electrical power storage 28. For example, where the electrical power storage 28 is configured as the battery or the bank of multiple batteries, the aircraft structure 24 may be a battery box or another type of enclosed container. With such arrangements, (e.g., all) other parts of the electrical system 22 may be located outside of the aircraft structure 24 and its internal compartment 36 except for, for example, one or more electric lines 38 extending into the aircraft structure 24 and its internal compartment 36 to couple the electrical power storage 28 to the electrical devices 30 outside of the aircraft structure 24. The aircraft structure 24 may also provide a physical and/or protective barrier (e.g., a firewall, etc.) between the electrical power storage 28 and other components of the aircraft as well as individual(s) onboard the aircraft.

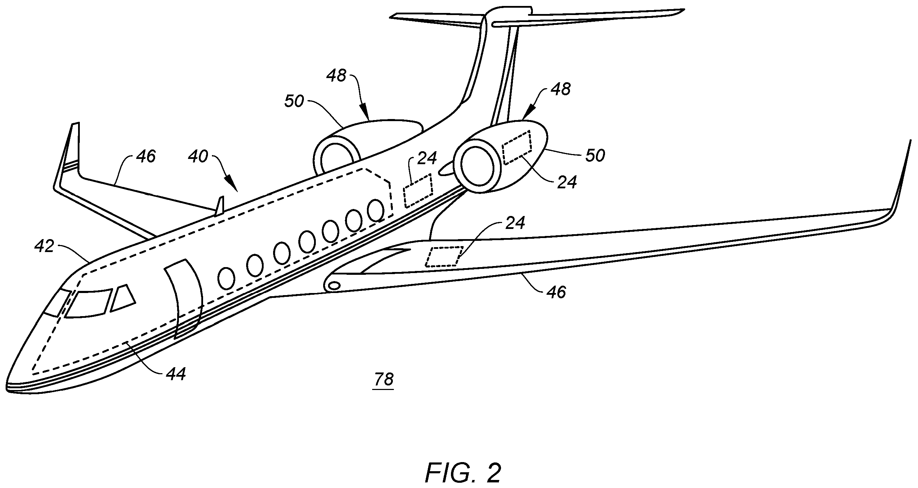

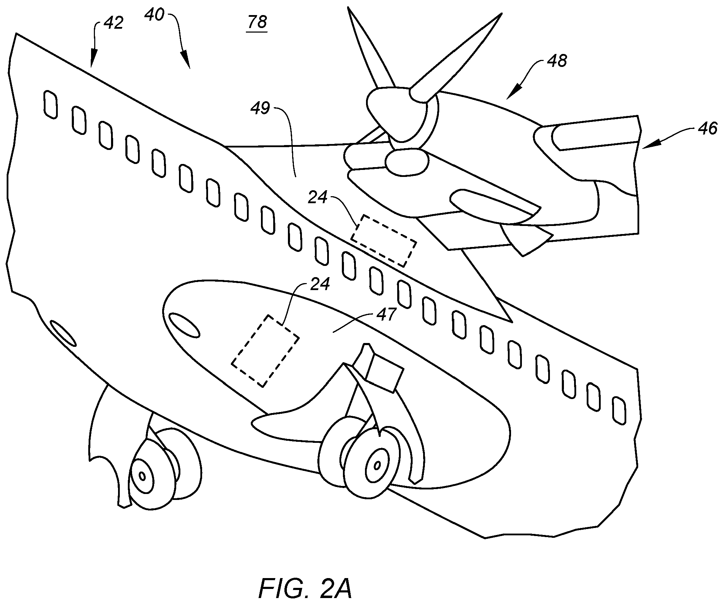

Referring to FIG. 2, the aircraft structure 24 may be located in an airframe 40 of the aircraft. The aircraft structure 24, for example, may be located within a fuselage 42 of the aircraft. When located in the fuselage 42, the aircraft structure 24 may be outside of an aircraft cabin 44; e.g., a passenger cabin, a cockpit, etc. The aircraft structure 24, for example, may be disposed in a mechanical system compartment, a belly of the aircraft, or the like. In another example, the aircraft structure 24 may be located within a wing 46 of the aircraft or another part of the aircraft airframe 40. In another example, referring to FIG. 2A, the aircraft structure 24 may be located within a landing gear fairing 47 projecting out from the fuselage 42. In still another example, the aircraft structure 24 may be located within a wing-fuselage fairing 47 at an interface between the wing 46 and the fuselage 42. Alternatively, referring again to FIG. 2, the aircraft structure 24 may be located in a propulsion system 48 of the aircraft. The aircraft structure 24, for example, may be located within a nacelle 50 for the aircraft propulsion system 48. The present invention, however, is not limited to the foregoing exemplary aircraft structure locations.

The aircraft structure 24 may be configured as a discrete structure; e.g., a standalone container onboard the aircraft. Alternatively, the aircraft structure 24 may be integrated with another structure or other structures of the aircraft. The aircraft structure 24, for example, may be a container built into, built as a part of, etc. the aircraft airframe 40, the aircraft propulsion system 48 or another part of the aircraft.

Referring to FIG. 1, the air system 26 is configured to direct pressurized air into the aircraft structure 24 and its internal compartment 36 to provide a conditioned (e.g., heated and/or cooled) and/or vented environment for the electrical power storage 28. The air system 26 of FIG. 1, for example, includes one or more air sources 52A-D (generally referred to as "52") and a flow circuit 53.

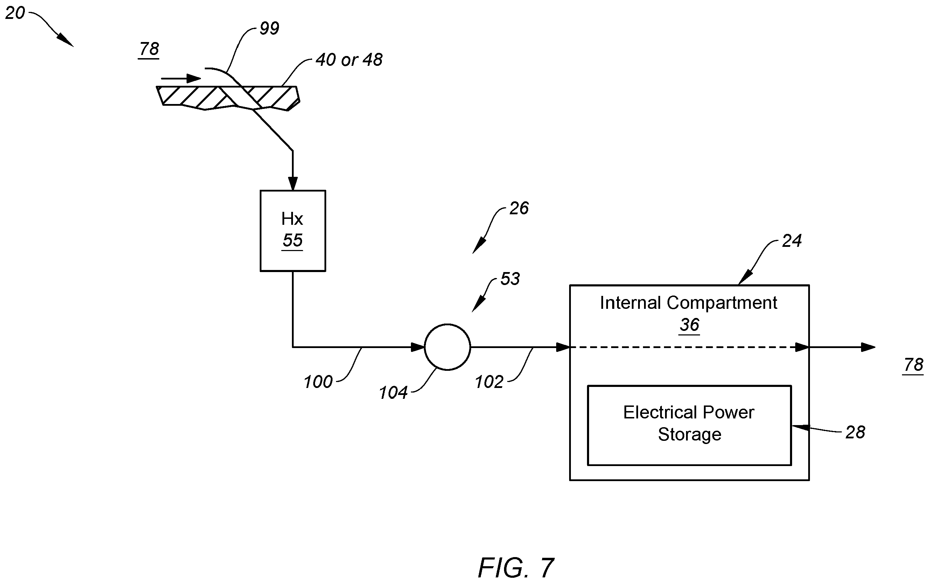

Each air source 52 is configured to output pressurized air, which pressurized air may be a working fluid of the respective air source 52, waste air from the respective air source 52 and/or ambient air from an environment 78 external to the aircraft (see FIG. 2). Examples of the air sources 52 include, but are not limited to, a compressed air bleed of an aircraft engine, an aircraft sub-system, a conditioned aircraft environment, and an air port (e.g., a scoop or other aperture) fluidly coupled with the external environment 78 (see FIG. 7). Examples of the aircraft sub-system include, but are not limited to, an environmental control system (ECS), a thermal anti-icing system and a pneumatic aircraft system. An example of the conditioned aircraft environment is the aircraft cabin 44 (see FIG. 2). Where the air source 52 is the aircraft sub-system or the conditioned aircraft environment, the air output from this air source 52 may not only be pressurized, but may also be conditioned; e.g., heated, cooled, dehumidified, humidified, etc. By contrast, the air output from the compressed air bleed of the aircraft engine may be pressurized, but otherwise may not be further conditioned. Of course, it is contemplated the air output from the compressed air bleed may alternatively be passed through an additional heat exchanger and/or other devices (e.g., an accelerator) prior to providing that air to the internal compartment 36. For example, the air source 52D may be fluidly coupled with and upstream of a heat exchanger 55 (e.g., a heater, a cooler) and/or another device which conditions, accelerates, decelerates, etc. the pressurized air.

The aircraft engine may be configured as part of a respective one of the aircraft propulsion systems 48 (see FIG. 2). This aircraft propulsion system may be configured as a turbofan propulsion system, a turboprop propulsion system, a turboshaft propulsion system, a turbojet propulsion system, or any other type of ducted or open rotor propulsion system which may provide powered lift, blown lift, propulsion thrust, or any combination thereof. The aircraft engine may alternatively be configured as part of an electrical power system for the aircraft. This aircraft power system, for example, may be configured as an auxiliary power unit (APU) for the aircraft. The aircraft engine may be configured as or otherwise include an internal combustion (IC) engine such as a gas turbine engine. However, it is contemplated the aircraft engine may alternatively be configured as another type of internal combustion engine which compresses air for operation thereof; e.g., a turbo-compounded rotary engine (e.g., a Wankel cycle engine), etc. Moreover, it is contemplated each aircraft propulsion system 48 may also or alternatively include an electric motor (or an electric motor-generator) powered using electricity stored by the electrical power storage 28 and/or electricity generated by the aircraft engine.

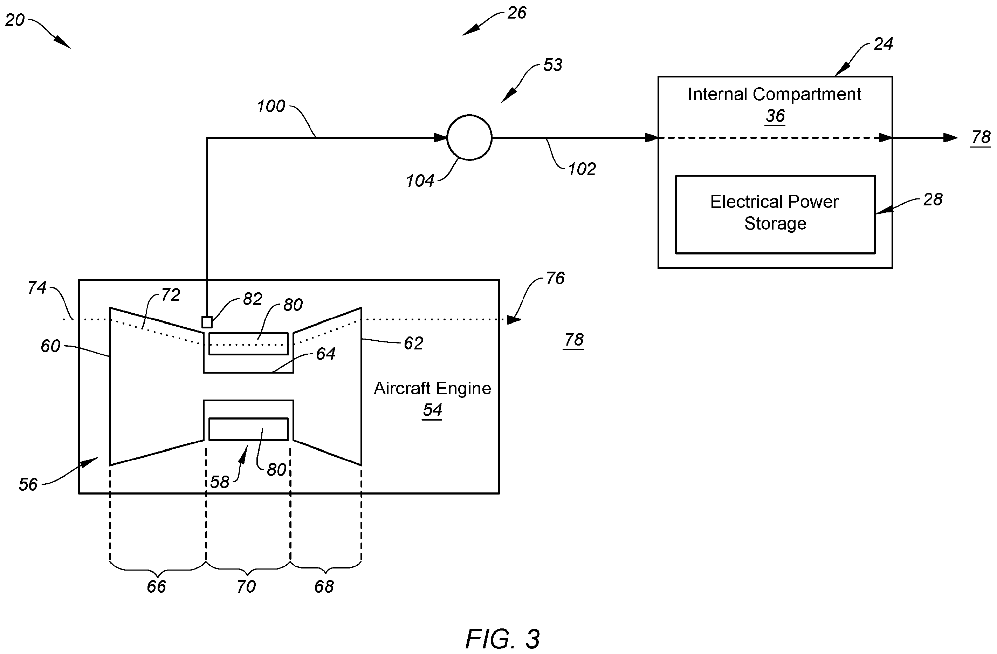

FIG. 3 illustrates an exemplary gas turbine engine 54. This gas turbine engine 54 of FIG. 3 includes a rotating assembly 56, a combustor 58 and an engine case housing the rotating assembly 56 and the combustor 58. The rotating assembly 56 includes a bladed compressor rotor 60, a bladed turbine rotor 62 and an engine shaft 64 connecting the compressor rotor 60 to the turbine rotor 62. The compressor rotor 60 is arranged in a compressor section 66 of the gas turbine engine 54. The turbine rotor 62 is arranged within a turbine section 68 of the gas turbine engine 54. The combustor 58 is arranged within a combustor section 70 of the gas turbine engine 54.

During operation of the gas turbine engine 54, air enters a core flowpath 72 within the gas turbine engine 54 through an airflow inlet 74 into the core flowpath 72. The core flowpath 72 extends sequentially through the compressor section 66, the combustor section 70 and the turbine section 68 from the core inlet 74 to a combustion products exhaust 76 from the core flowpath 72, which core exhaust 76 is fluidly coupled with the environment 78 external to the gas turbine engine 54 and, more generally, the aircraft; see also FIGS. 1 and 2. The air entering the gas turbine engine 54 and its core flowpath 72 is compressed by the compressor rotor 60 and directed into a combustion chamber 80 of the combustor 58. Fuel is injected into the combustion chamber 80 by one or more fuel injectors and mixed with the compressed air to provide a fuel-air mixture. This fuel-air mixture is ignited and combustion products thereof flow through and cause the turbine rotor 62 to rotate. The rotation of the turbine rotor 62 drives rotation of the compressor rotor 60 and, thus, compression of the air received from the core inlet 74.

The gas turbine engine 54 of FIG. 3 includes its compressed air bleed 82 along the core flowpath 72. Examples of the compressed air bleed 82 include, but are not limited to, an air scoop and an air bleed orifice. The compressed air bleed 82 is configured to bleed off a portion of the compressed air flowing through the core flowpath 72 to provide engine bleed air. The compressed air bled from the core flowpath 72 may be fully compressed air where, for example, the compressed air bleed 82 is located downstream of the compressor section 66 and upstream of the combustor 58 along the core flowpath 72. Alternatively, the compressed air bled from the core flowpath 72 may be partially compressed air where, for example, the compressed air bleed 82 is located longitudinally along the compressor section 66; e.g., at an intermediate location longitudinally along the compressor section 66. The present invention, however, is not limited to such exemplary compressed air bleed locations.

The gas turbine engine 54 is described above as a single rotating assembly (e.g., a single spool) gas turbine engine for ease of description. The present invention, however, is not limited to such an exemplary gas turbine engine arrangement. The gas turbine engine, for example, may include two or more rotating assemblies; e.g., spools. Moreover, the gas turbine engine may include two or more compressor sections; e.g., a low pressure compressor (LPC) section and a high pressure compressor (HPC) section. Where the gas turbine engine includes multiple compressor sections, the compressed air bleed 82 may be located longitudinally along any one of the compressor sections, between two of the compressor sections, or downstream of all of the compressor sections. The gas turbine engine may also include two or more of the turbine sections; e.g., a high pressure turbine (HPT) section and a low pressure turbine (LPC) section / a power turbine (PT) section.

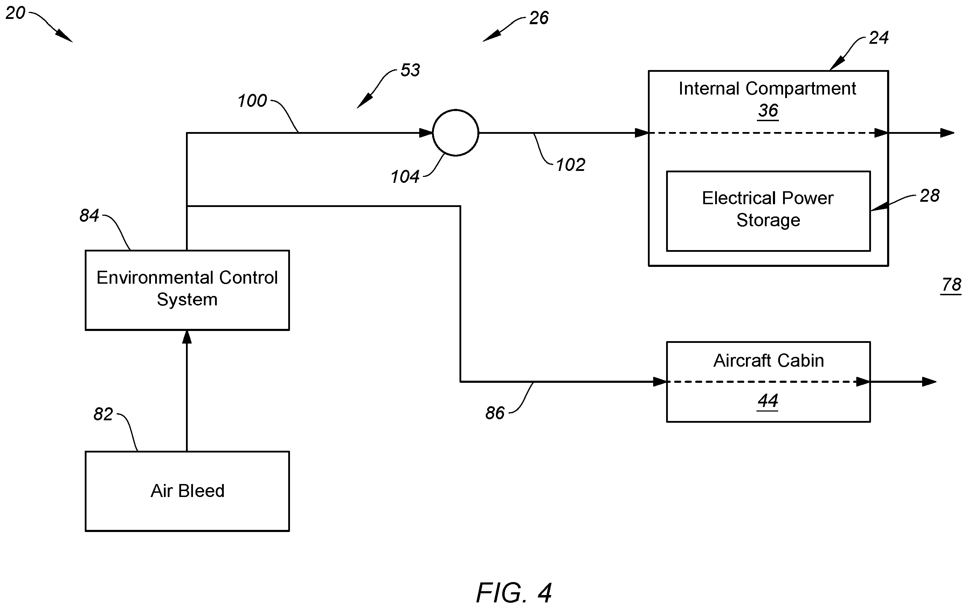

FIG. 4 illustrates an exemplary environmental control system 84. This environmental control system 84 is configured to receive at least a portion (or all) of the bleed air from the aircraft engine (via the compressed air bleed 82) and condition that bleed air to provide conditioned air to the aircraft cabin 44. The environmental control system 84, for example, may include various internal elements for heating, cooling, filtering and/or otherwise metering and/or conditioning the bleed air to provide the conditioned air. Examples of these internal elements include, but are not limited to, a heat exchanger, a filter, valving, a heater, a cooler, and the like. An outlet from the environmental control system 84 is fluidly coupled to an inlet into the aircraft cabin 44 by an environmental control system (ECS) flow circuit 86. This ECS flow circuit 86 is configured to direct the conditioned air into the aircraft cabin 44.

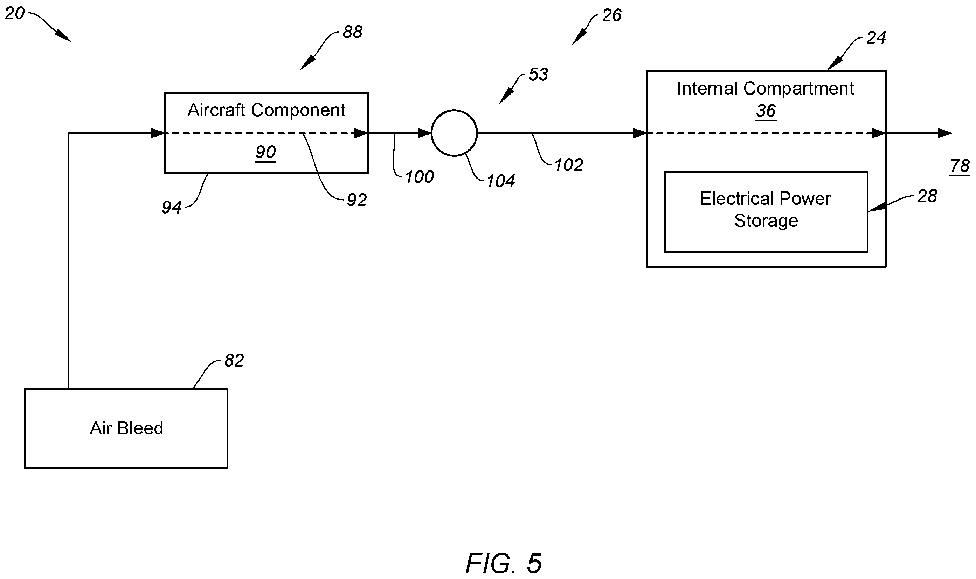

FIG. 5 illustrates an exemplary anti-icing system 88 for the aircraft. This anti-icing system 88 is configured to receive at least a portion (or all) of the bleed air from the aircraft engine (via the compressed air bleed 82) and route that air into one or more components 90 (one visible in FIG. 5 for ease of illustration) of the aircraft for anti-icing. Examples of the aircraft components 90 may include, but are not limited to, an inlet lip for the propulsion system nacelle 50 (see FIG. 2), a leading edge of a respective one of the aircraft wings 46 (see FIG. 2), and the like. The anti-icing system 88 routes the air through one or more passages 92 (one visible in FIG. 5 for ease of illustration) along an exterior skin 94 of each aircraft component 90 to heat that exterior skin 94. The air is then exhausted from the anti-icing system 88 through one or more outlets from the anti-icing system 88. Here, the air is exhausted from the anti-icing system 88 through its outlet(s) following the heating of the respective aircraft component 90 and its exterior skin 94.

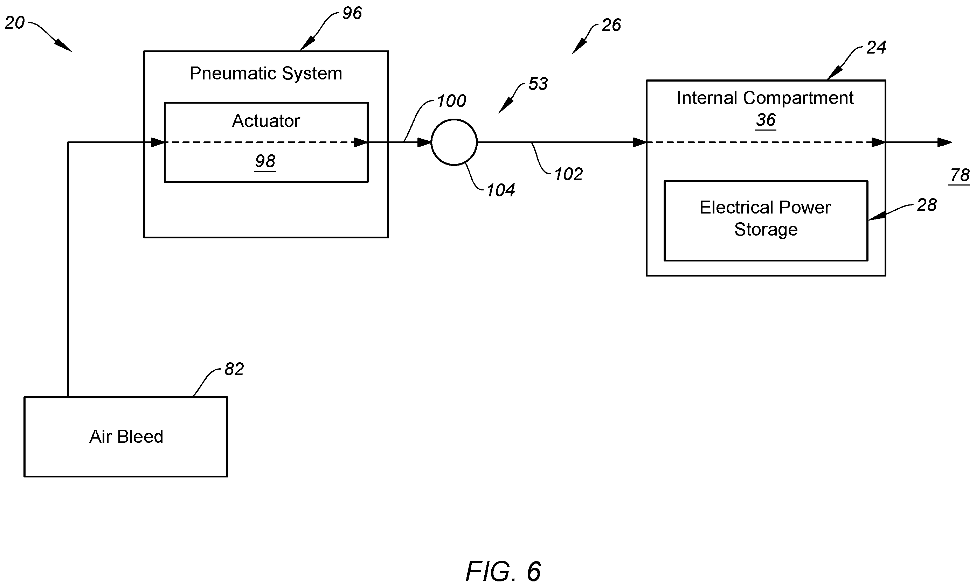

FIG. 6 illustrates an exemplary pneumatic system 96 for the aircraft. This pneumatic system 96 includes one or more pneumatic actuators 98 (one visible in FIG. 5 for ease of illustration) configured to move one or more other components of the aircraft. This pneumatic system 96 is configured to receive at least a portion (or all) of the bleed air from the aircraft engine (via the compressed air bleed 82) and route that air to each pneumatic actuator 98 to facilitate operation of that pneumatic actuator 98. Following passing through the pneumatic actuators 98, the air is then exhausted from the pneumatic system 96 through one or more outlets from the pneumatic system 96. Here, the air is exhausted from the pneumatic system 96 through its outlet(s) following the use thereof by the actuators 98 for operation.

FIG. 7 illustrates an exemplary air port 99 for the aircraft configured with the air system 26. This air port 99 of FIG. 7 is configured as a scoop; e.g., a ram air scoop. The air port 99 is configured to direct (e.g., ram) ambient air from the external environment 78 into the air system 26 to provide the pressurized air. While the exemplary air port 99 is shown in FIG. 7 as a scoop which projects out from the aircraft airframe 40 or a respective aircraft propulsion system 48 into the external environment 78, the present invention is not limited to such an exemplary configuration. The air port, for example, may alternatively be configured as a NACA type scoop, or a simple aperture in, for example, a leading edge of another component of the aircraft.

Referring to FIG. 1, the flow circuit 53 is configured to fluidly couple a respective outlet from each air source 52 (e.g., see also FIGS. 3-6A) to an inlet into the aircraft structure 24 and its internal compartment 36. The flow circuit 53 of FIG. 1, for example, includes one or more upstream legs 100A-D (generally referred to as "100") (e.g., one upstream leg 100 associated with each air source 52 and/or each air source outlet), a downstream leg 102 and a flow regulator 104. Each upstream leg 100 is fluidly coupled with and extends between a respective air source outlet and a respective inlet into the flow regulator 104. The downstream leg 102 is fluidly coupled with and extends between an outlet from the flow regulator 104 and the inlet into the aircraft structure 24 and its internal compartment 36.

The flow regulator 104 of FIG. 1 is configured as a multi-way valve (or valve system) which can selectively (e.g., an independently) fluidly couple each upstream leg 100 with (or fluidly decouple each upstream leg 100 from) the downstream leg 102. With this configuration, the flow regulator 104 may selectively fluidly couple each upstream leg 100 and its associated air source 52 to the downstream leg 102 and, thus, the aircraft structure 24 and its internal compartment 36. For example, during one mode of operation, the flow regulator 104 may concurrently fluidly couple all of the air sources 52 to the internal compartment 36. During another mode of operation, the flow regulator 104 may concurrently fluidly couple any subset (e.g., any two in FIG. 1) of the air sources 52 to the internal compartment 36, while fluidly decoupling the other air source 52 (or air sources 52) from the internal compartment 36. During another mode of operation, the flow regulator 104 may fluidly couple any single one of the air sources 52 to the internal compartment 36, while fluidly decoupling the other air source 52 (or air sources 52) from the internal compartment 36. During still another mode of operation, the flow regulator 104 may fluidly decouple all of the air sources 52 from the internal compartment 36. When multiple air sources 52 are fluidly coupled to the internal compartment 36, the flow regulator 104 may (a) direct uniform (the same) flows from the respective air sources 52 to the internal compartment 36 or (b) alternatively direct varying (e.g., different, changing, etc.) flows from the respective air sources 52 to the internal compartment 36. The present invention, however, is not limited to the foregoing exemplary flow regulator operating modes nor to such an exemplary flow regulator.

During operation of the air system 26, the flow circuit 53 selectively directs the pressurized air output from one or more of the air sources 52 into the aircraft structure 24 and its internal compartment 36. This pressurized air is used to condition (e.g., heat and/or cool) the environment within the internal compartment 36 and surrounding and contacting the electrical power storage 28. The pressurized air may also or alternatively be used to circulate the air within the internal compartment 36 and/or flush out the air within the internal compartment 36. The pressurized air, for example, may displace air already within the internal compartment 36 and cause that air to be exhausted out from the aircraft structure 24 and its internal compartment 36 into, for example, the external environment 78. With this operation, where the electrical power storage 28 is configured as the battery or the bank of multiple batteries, the pressurized air directed into the internal compartment 36 may partially or completely flush out any off-gassing from the battery or the bank of multiple batteries. Thus, where the pressurized air is provided by the environmental control system 84 of FIG. 4, the anti-icing system 88 of FIG. 5, the pneumatic system 96 of FIG. 6 and/or the aircraft cabin 44 of FIG. 2, the air system 26 may utilize pressurized air which may otherwise be wasted into the external environment 78 (or otherwise) for servicing the electrical power storage 28 / the internal compartment 36. With this arrangement, bleed air demand from the aircraft engine may be decreased (compared to if bleed air alone was used to service the electrical power storage 28 / the internal compartment 36), which may facilitate improved aircraft engine power and/or efficiency. Moreover, by utilizing pressurized air from one or more air sources 52 other than the compressed air bleed 82 of FIG. 3 such as the anti-icing system 88 of FIG. 5, the pneumatic system 96 of FIG. 6 and/or the aircraft cabin 44 of FIG. 2, the pressurized air directed into the internal compartment 36 may be conditioned (e.g., heated, cooled, etc.) in addition to being pressurized.

The air system 26 of FIG. 1 is shown with three of the air sources 52 fluidly couplable to the aircraft structure 24 and its internal compartment 36 for ease of description. The air system 26 of the present invention, however, is not limited to such an exemplary arrangement. For example, the air system 26 may include a single one of the air sources 52 fluidly couplable to the aircraft structure 24 and its internal compartment 36, which air source 52 may be any one of the air sources 52 described above or otherwise. In another example, the air system 26 may include any two of the air sources 52 fluidly couplable to the aircraft structure 24 and its internal compartment 36, or four or more of the air sources 52 fluidly couplable to the aircraft structure 24 and its internal compartment 36.

In some embodiments, referring to FIG. 1, the air system 26 may also include one or more additional valves 105A-E (generally referred to as "105"); e.g., check valves. Each of these valves 105 may be configured to prevent back flow through a respective leg 100, 102. The upstream valves 105A-D are arranged upstream of the flow regulator 104. The upstream valve 105A, for example, is arranged along the upstream leg 100A between the air source 52A and the flow regulator 104. The upstream valve 105B is arranged along the upstream leg 100B between the air source 52B and the flow regulator 104. The upstream valve 105C is arranged along the upstream leg 100C between the air source 52C and the flow regulator 104. The upstream valve 105D is arranged along the upstream leg 100D between the air source 52D and the flow regulator 104. More particularly, the upstream valve 105D is arranged along the upstream leg 100D between the heat exchanger 55 and the flow regulator 104; however, in other embodiments, the upstream valve 105D may alternatively be arranged along the upstream leg 100D between the heat exchanger 55 and the air source 52D. The downstream valve 105E is arranged downstream of the flow regulator 104. The downstream valve 105E, for example, is arranged along the downstream leg 102 between the flow regulator 104 and the internal compartment 36. While each leg 100, 102 is shown with one of the valves 105 in FIG. 1, it is contemplated any one or more of the legs 100 and/or 102 may be configured without one of the valves 105.

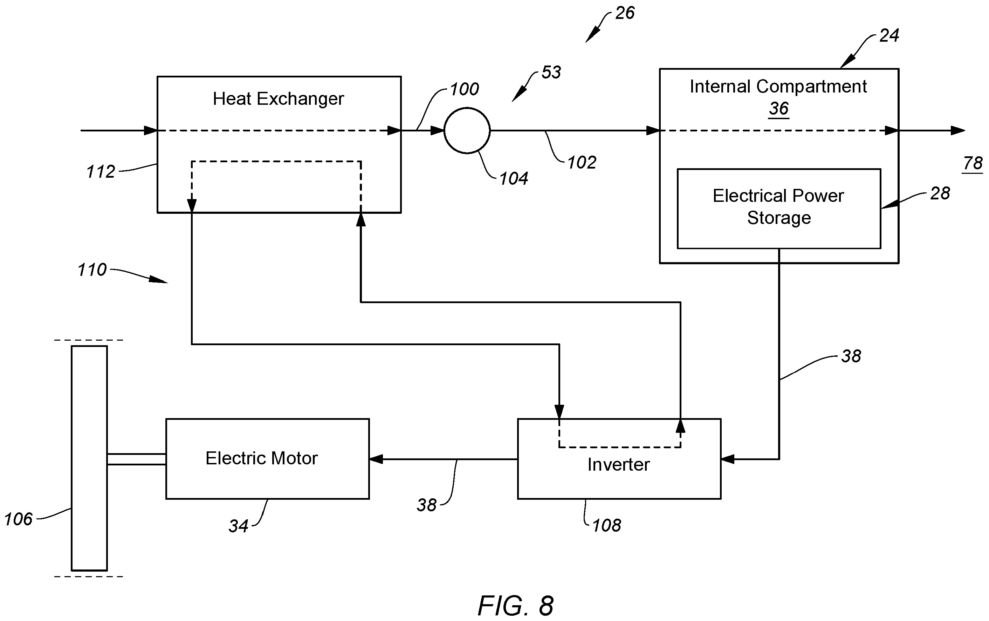

In some embodiments, referring to FIG. 8, the electric motor 34 may be operably coupled to and configured to drive rotation of a bladed propulsor rotor 106 (e.g., an air mover), where the rotation of the propulsor rotor 106 may generate aircraft thrust and/or aircraft lift. The propulsor rotor 106 may be configured as a ducted propulsor rotor or an open propulsor rotor (e.g., an un-ducted propulsor rotor). Examples of the ducted propulsor rotor include, but are not limited to, a fan rotor and a compressor rotor. Examples of the open propulsor rotor include, but are not limited to, a propeller rotor, a propfan open rotor, a pusher fan open rotor and a rotorcraft rotor (e.g., a main helicopter rotor). The present invention, however, is not limited to such exemplary propulsor rotor configurations.

In some embodiments, referring still to FIG. 8, the electric motor 34 (and/or another one of the electrical device(s)) may be electrically coupled to the electrical power storage 28 through an alternating-current (AC) / direct-current (DC) inverter 108. This AC/DC inverter 108 may be cooled using an electrical cooling system 110 with a heat exchanger 112. In some embodiments, the electrical cooling system 110 and its heat exchanger 112 may be configured as the air source of one of the air sources for the air system 26. For example, air output from the heat exchanger 112 may be directed to the aircraft structure 24 and its internal compartment 36 through the flow circuit 53.

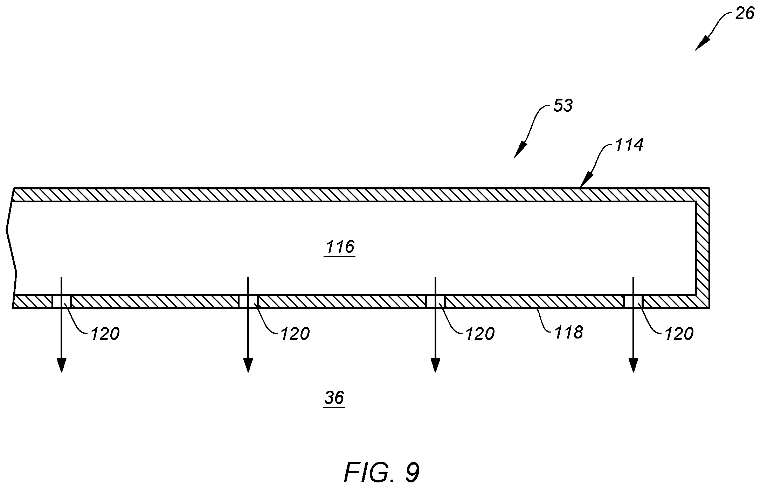

In some embodiments, referring to FIG. 9, the air system 26 may include a piccolo tube 114 for injecting the pressurized air into the aircraft structure 24 (see FIG. 1) and its internal compartment 36. This piccolo tube 114 includes an internal bore 116 which may form an end portion of the flow circuit 53. A tubular sidewall 118 of the piccolo tube 114 includes one or more outlets 120. Each of these outlets 120 is configured to direct a stream (e.g., a jet) of the pressurized air into the internal compartment 36. The present invention, however, is not limited to such an exemplary structure for injecting the pressurized air into the internal compartment 36.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims.

## Claims

1. A system (20) for an aircraft, the system comprising:
an aircraft structure (24) comprising an internal compartment (36);
an electrical power storage (28) housed within the internal compartment (36); and
an air system (26) configured to direct pressurized air into the internal compartment (36), wherein the air system (26) includes a plurality of air sources (52A, 52B, 52C) and a flow regulator (104), and the flow regulator (104) is configured to fluidly couple each of the plurality of air sources (52A, 52B, 52C) to the internal compartment (36),
wherein the air system (26) is configured to direct the pressurized air into the internal compartment (36) to condition an environment surrounding the electrical power storage (28).

2. The system (20) of claim 1, wherein the electrical power storage (28) comprises a battery, wherein the air system is optionally configured to direct the pressurized air into the internal compartment (36) to flush off-gassing from the battery out of the internal compartment (36).

3. The system (20) of any preceding claim, wherein:
the plurality of air sources (52A, 52B, 52C) include a first air source (52A) and a second air source (52B); and
the flow regulator (104) is configured to concurrently fluidly couple the first air source (52A) and the second air source (52B) to the internal compartment (36).

4. The system (20) of claim 1 or 2, wherein:
the plurality of air sources (52A, 52B, 52C) include a first air source (52A) and a second air source (52B);
the flow regulator (104) is configured to fluidly couple the first air source (52A) to the internal compartment (36) during a first mode; and
the flow regulator (104) is configured to fluidly couple the second air source (52B) to the internal compartment (36) during a second mode.

5. The system (20) of claim 4, wherein:
the flow regulator (104) is configured to fluidly decouple the second air source (52B) from the internal compartment (36) during the first mode; and/or
the flow regulator (104) is configured to fluidly decouple the first air source (52A) from the internal compartment (36) during the second mode.

6. The system (20) of any preceding claim, wherein the aircraft structure (24) includes an outlet to an ambient external environment (78) fluidly coupled to the internal compartment (36).

7. The system (20) of any preceding claim, further comprising an internal combustion engine (54), wherein one of the plurality of air sources (52A, 52B, 52C) comprises a bleed (82) from the internal combustion engine (54).

8. The system (20) of any preceding claim, further comprising an environmental control system (84) for a cabin of the aircraft, wherein one of the plurality of air sources (52A, 52B, 52C) comprises an outlet from the environmental control system (84).

9. The system (20) of any preceding claim, further comprising:
an aircraft cabin, wherein one of the plurality of air sources (52A, 52B, 52C) comprises an outlet from the aircraft cabin; and/or
an anti-icing system (88), wherein one of the plurality of air sources (52A, 52B, 52C) comprises an outlet from the anti-icing system (88).

10. The system (20) of any preceding claim, further comprising:
a pneumatic system (96) comprising a pneumatic actuator (98), wherein one of the plurality of air sources (52A, 52B, 52C) comprises an outlet from the pneumatic system (96); and/or
an air port (99) fluidly coupled with an ambient environment (78) external to the aircraft, wherein one of the plurality of air sources (52A, 52B, 52C) comprises the air port (99).

11. The system (20) of any preceding claim, wherein the air system (26) further comprises an upstream check valve (105A, 105B, 105C, 105D) fluidly coupled with and between one of the plurality of air sources (52A, 52B, 52C) and the flow regulator (104).

12. The system (20) of any preceding claim, wherein the air system (26) further comprises a downstream check valve (105E) fluidly coupled with and between the flow regulator (104) and the internal compartment (36).

13. The system (20) of any preceding claim, further comprising:
a propulsor rotor (106); and
an electric motor (34) configured to drive rotation of the propulsor rotor (106), the electric motor (34) electrically coupled to the electric power storage.

14. The system (20) of any preceding claim, further comprising an aircraft airframe (40), wherein the aircraft structure (24) is configured as part of and/or housed within the aircraft airframe (40).

15. The system (20) of any of claims 1 to 13, further comprising an aircraft propulsion system (48), wherein the aircraft structure (24) is configured as part of and/or housed within the aircraft propulsion system (48).

## Patentansprüche

1. System (20) für ein Luftfahrzeug, wobei das System umfasst:
eine Luftfahrzeugstruktur (24) mit einem Innenraum (36);
einen elektrischen Energiespeicher (28), der innerhalb des Innenraums (36) untergebracht ist; und
ein Luftsystem (26), das dazu ausgebildet ist, Druckluft in den Innenraum (36) zu leiten, wobei das Luftsystem (26) mehrere Luftquellen (52A, 52B, 52C) und einen Strömungsregler (104) umfasst, und der Strömungsregler (104) dazu ausgebildet ist, jede der mehreren Luftquellen (52A, 52B, 52C) fluidisch mit dem Innenraum (36) zu koppeln,
wobei das Luftsystem (26) dazu ausgebildet ist, die Druckluft in den Innenraum (36) zu leiten, um eine Umgebung um den elektrischen Energiespeicher (28) zu konditionieren.

2. System (20) nach Anspruch 1, wobei der elektrische Energiespeicher (28) eine Batterie umfasst, wobei das Luftsystem optional dazu ausgebildet ist, die Druckluft in den Innenraum (36) zu leiten, um Ausgasungen der Batterie aus dem Innenraum (36) auszuspülen.

3. System (20) nach einem der vorhergehenden Ansprüche, wobei:
die mehreren Luftquellen (52A, 52B, 52C) eine erste Luftquelle (52A) und eine zweite Luftquelle (52B) umfassen; und
der Strömungsregler (104) dazu ausgebildet ist, die erste Luftquelle (52A) und die zweite Luftquelle (52B) gleichzeitig fluidisch mit dem Innenraum (36) zu koppeln.

4. System (20) nach Anspruch 1 oder 2, wobei:
die mehreren Luftquellen (52A, 52B, 52C) eine erste Luftquelle (52A) und eine zweite Luftquelle (52B) umfassen;
der Strömungsregler (104) dazu ausgebildet ist, die erste Luftquelle (52A) während eines ersten Modus fluidisch mit dem Innenraum (36) zu koppeln; und
der Strömungsregler (104) dazu ausgebildet ist, die zweite Luftquelle (52B) während eines zweiten Modus fluidisch mit dem Innenraum (36) zu koppeln.

5. System (20) nach Anspruch 4, wobei:
der Strömungsregler (104) dazu ausgebildet ist, die zweite Luftquelle (52B) während des ersten Modus fluidisch von dem Innenraum (36) zu entkoppeln; und/oder
der Strömungsregler (104) dazu ausgebildet ist, die erste Luftquelle (52A) während des zweiten Modus fluidisch von dem Innenraum (36) zu entkoppeln.

6. System (20) nach einem der vorhergehenden Ansprüche, wobei die Luftfahrzeugstruktur (24) einen Auslass zu einer äußeren Umgebung (78) umfasst, der fluidisch mit dem Innenraum (36) gekoppelt ist.

7. System (20) nach einem der vorhergehenden Ansprüche, ferner umfassend einen Verbrennungsmotor (54), wobei eine der mehreren Luftquellen (52A, 52B, 52C) eine Zapfluft (82) aus dem Verbrennungsmotor (54) umfasst.

8. System (20) nach einem der vorhergehenden Ansprüche, ferner umfassend ein Umgebungskontrollsystem (84) für eine Kabine des Luftfahrzeugs, wobei eine der mehreren Luftquellen (52A, 52B, 52C) einen Auslass aus dem Umgebungskontrollsystem (84) umfasst.

9. System (20) nach einem der vorhergehenden Ansprüche, ferner umfassend:
eine Luftfahrzeugkabine, wobei eine der mehreren Luftquellen (52A, 52B, 52C) einen Auslass aus der Luftfahrzeugkabine umfasst; und/oder
ein Enteisungssystem (88), wobei eine der mehreren Luftquellen (52A, 52B, 52C) einen Auslass aus dem Enteisungssystem (88) umfasst.

10. System (20) nach einem der vorhergehenden Ansprüche, ferner umfassend:
ein Pneumatiksystem (96) mit einem pneumatischen Aktuator (98), wobei eine der mehreren Luftquellen (52A, 52B, 52C) einen Auslass aus dem Pneumatiksystem (96) umfasst; und/oder
einen Luftanschluss (99), der fluidisch mit einer äußeren Umgebung (78) außerhalb des Luftfahrzeugs gekoppelt ist, wobei eine der mehreren Luftquellen (52A, 52B, 52C) den Luftanschluss (99) umfasst.

11. System (20) nach einem der vorhergehenden Ansprüche, wobei das Luftsystem (26) ferner ein stromaufwärtiges Rückschlagventil (105A, 105B, 105C, 105D) umfasst, das fluidisch mit und zwischen einer der mehreren Luftquellen (52A, 52B, 52C) und dem Strömungsregler (104) gekoppelt ist.

12. System (20) nach einem der vorhergehenden Ansprüche, wobei das Luftsystem (26) ferner ein stromabwärtiges Rückschlagventil (105E) umfasst, das fluidisch mit und zwischen dem Strömungsregler (104) und dem Innenraum (36) gekoppelt ist.

13. System (20) nach einem der vorhergehenden Ansprüche, ferner umfassend:
einen Propulsorrotor (106); und
einen Elektromotor (34), der dazu ausgebildet ist, eine Drehung des Propulsorrotors (106) anzutreiben, wobei der Elektromotor (34) elektrisch mit dem elektrischen Energiespeicher gekoppelt ist.

14. System (20) nach einem der vorhergehenden Ansprüche, ferner umfassend eine Luftfahrzeugzelle (40), wobei die Luftfahrzeugstruktur (24) als Teil der Luftfahrzeugzelle (40) ausgebildet und/oder innerhalb dieser untergebracht ist.

15. System (20) nach einem der Ansprüche 1 bis 13, ferner umfassend ein Luftfahrzeugantriebssystem (48), wobei die Luftfahrzeugstruktur (24) als Teil des Luftfahrzeugantriebssystems (48) ausgebildet und/oder innerhalb dieses untergebracht ist.

## Revendications

1. Système (20) pour un aéronef, le système comprenant :
une structure d'aéronef (24) comprenant un compartiment interne (36) ;
un dispositif de stockage d'énergie électrique (28) logé à l'intérieur du compartiment interne (36) ; et
un système d'air (26) configuré pour diriger de l'air pressurisé dans le compartiment interne (36), dans lequel le système d'air (26) comprend une pluralité de sources d'air (52A, 52B, 52C) et un régulateur de débit (104), et le régulateur de débit (104) est configuré pour coupler fluidiquement chacune de la pluralité de sources d'air (52A, 52B, 52C) au compartiment interne (36),
dans lequel le système d'air (26) est configuré pour diriger l'air pressurisé dans le compartiment interne (36) afin de conditionner un environnement entourant le dispositif de stockage d'énergie électrique (28).

2. Système (20) selon la revendication 1, dans lequel le dispositif de stockage d'énergie électrique (28) comprend une batterie, dans lequel le système d'air est éventuellement configuré pour diriger l'air pressurisé dans le compartiment interne (36) afin de purger les émanations gazeuses de la batterie hors du compartiment interne (36).

3. Système (20) selon une quelconque revendication précédente, dans lequel :
la pluralité de sources d'air (52A, 52B, 52C) comprennent une première source d'air (52A) et une deuxième source d'air (52B) ; et
le régulateur de débit (104) est configuré pour coupler fluidiquement de manière concomitante la première source d'air (52A) et la deuxième source d'air (52B) au compartiment interne (36).

4. Système (20) selon la revendication 1 ou 2, dans lequel :
la pluralité de sources d'air (52A, 52B, 52C) comprennent une première source d'air (52A) et une deuxième source d'air (52B) ;
le régulateur de débit (104) est configuré pour coupler fluidiquement la première source d'air (52A) au compartiment interne (36) pendant un premier mode ; et
le régulateur de débit (104) est configuré pour coupler fluidiquement la deuxième source d'air (52B) au compartiment interne (36) pendant un deuxième mode.

5. Système (20) selon la revendication 4, dans lequel :
le régulateur de débit (104) est configuré pour découpler fluidiquement la deuxième source d'air (52B) du compartiment interne (36) pendant le premier mode ; et/ou
le régulateur de débit (104) est configuré pour découpler fluidiquement la première source d'air (52A) du compartiment interne (36) pendant le deuxième mode.

6. Système (20) selon une quelconque revendication précédente, dans lequel la structure d'aéronef (24) comprend une sortie vers un environnement externe ambiant (78) couplée fluidiquement au compartiment interne (36).

7. Système (20) selon une quelconque revendication précédente, comprenant en outre un moteur à combustion interne (54), dans lequel l'une de la pluralité de sources d'air (52A, 52B, 52C) comprend une prise d'air (82) issue du moteur à combustion interne (54).

8. Système (20) selon une quelconque revendication précédente, comprenant en outre un système de conditionnement d'environnement (84) pour une cabine de l'aéronef, dans lequel l'une de la pluralité de sources d'air (52A, 52B, 52C) comprend une sortie du système de conditionnement d'environnement (84).

9. Système (20) selon une quelconque revendication précédente, comprenant en outre :
une cabine d'aéronef, dans lequel l'une de la pluralité de sources d'air (52A, 52B, 52C) comprend une sortie de la cabine d'aéronef ; et/ou
un système antigivrage (88), dans lequel l'une de la pluralité de sources d'air (52A, 52B, 52C) comprend une sortie du système antigivrage (88).

10. Système (20) selon une quelconque revendication précédente, comprenant en outre :
un système pneumatique (96) comprenant un actionneur pneumatique (98), dans lequel l'une de la pluralité de sources d'air (52A, 52B, 52C) comprend une sortie du système pneumatique (96) ; et/ou
un orifice d'air (99) couplé fluidiquement à un environnement ambiant (78) externe à l'aéronef, dans lequel l'une de la pluralité de sources d'air (52A, 52B, 52C) comprend l'orifice d'air (99).

11. Système (20) selon une quelconque revendication précédente, dans lequel le système d'air (26) comprend en outre un clapet anti-retour amont (105A, 105B, 105C, 105D) couplé fluidiquement avec et entre l'une de la pluralité de sources d'air (52A, 52B, 52C) et le régulateur de débit (104).

12. Système (20) selon une quelconque revendication précédente, dans lequel le système d'air (26) comprend en outre un clapet anti-retour aval (105E) couplé fluidiquement avec et entre le régulateur de débit (104) et le compartiment interne (36).

13. Système (20) selon une quelconque revendication précédente, comprenant en outre :
un rotor propulseur (106) ; et
un moteur électrique (34) configuré pour entraîner la rotation du rotor propulseur (106), le moteur électrique (34) étant couplé électriquement au dispositif de stockage d'énergie électrique.

14. Système (20) selon une quelconque revendication précédente, comprenant en outre une cellule d'aéronef (40), dans lequel la structure d'aéronef (24) est configurée comme faisant partie de et/ou logée à l'intérieur de la cellule d'aéronef (40).

15. Système (20) selon l'une quelconque des revendications 1 à 13, comprenant en outre un système de propulsion d'aéronef (48), dans lequel la structure d'aéronef (24) est configurée comme faisant partie de et/ou logée à l'intérieur du système de propulsion d'aéronef (48).
